# EUROPÄISCHE PATENTSCHRIFT

(11) **EP 2 812 980 B1**
(45) Veröffentlichungstag und Bekanntmachung des Hinweises auf die Patenterteilung: **15.08.2018**
(21) Anmeldenummer: 13700688.8
(22) Anmeldetag: 15.01.2013
(51) Int. Cl.: H02J 9/06

(54) **STROMVERSORGUNG**
POWER SUPPLY
ALIMENTATION ÉLECTRIQUE

(30) Priorität: 06.02.2012 EP 12153977
(43) Veröffentlichungstag der Anmeldung: 17.12.2014
(73) Patentinhaber: Siemens Aktiengesellschaft, 80333 München (DE)
(72) Erfinder: AUGESKY, Christian, A-1100 Wien (AT); SCHWEIGERT, Harald, A-1120 Wien (AT)
(86) Internationale Anmeldenummer: PCT/EP2013/050609
(87) Internationale Veröffentlichungsnummer: WO 2013/117387

(56) Entgegenhaltungen:
- US-A- 5 049 805
- US-A1- 2006 290 207
- US-A1- 2009 129 128
- US-A1- 2011 133 559

## Beschreibung

Die Erfindung betrifft eine Stromversorgung mit zumindest einem Ausgang zur Ausgabe einer Ausgangsgleichspannung und einer Schaltung zur unterbrechungsfreien Stromversorgung.

Stromversorgungen dienen der Umwandlung einer Versorgungsnetzspannung in eine geregelte Ausgangsgleichspannung zur Versorgung zumindest einer angeschlossenen Last. Viele Einsatzbereiche erfordern dabei eine Überbrückung von Netzausfällen. Beispielsweise sollen Steuerungen von Industrieanlagen bei kurzeitigen Ausfällen eines Versorgungsnetzes weiter mit elektrischer Energie versorgt werden. Dazu ist es notwendig, Energie zwischenzuspeichern und im Bedarfsfall an die zu versorgende Last abzugeben.

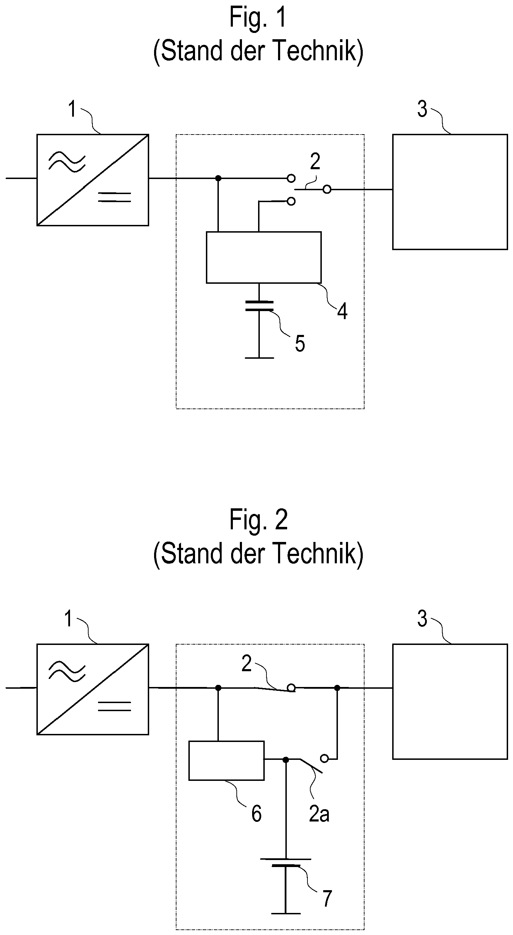

Nach dem Stand der Technik werden Schaltungen zur unterbrechungsfreien Stromversorgung (USV) am Ausgang einer Stromversorgung angeordnet. Beispielsweise wird eine Standardstromversorgung mit einer Ausgangsgleichspannung von z.B. 24V mit einer Gleichstrom-USV zusammengeschaltet. Als Energiespeicher der Gleichstrom-USV dienen entweder Kondensatoren (Fig. 1) oder Akkumulatoren (Fig. 2). Die Gleichstrom-USV bezieht die Energie zur Ladung des Energiespeichers aus der Standardstromversorgung.

Bei einer Kondensatorlösung wird infolge eines Netzausfalls ein Strompfad von der Standardstromversorgung zur Last auf einen Strompfad vom geladenen Kondensator zur Last umgeschaltet. Dabei sorgt ein Abwärts- oder Aufwärtsschaltregler für die Umwandlung der abnehmenden Kondensatorspannung auf die vorgegebene Ausgangsgleichspannung.

Ein unterbrechungsfreie Stromversorgung mit Batterie ist aus der US 2009/129128 A1 bekannt. Eine eingangsseitige Wechselspannung wird über eine PFC-Schaltung mittels eines ersten DC/DC-Wandlers in eine konstante Zwischenkreisspannung umgewandelt. An den Zwischenkreis ist ein weiterer DC/DC-Wandler zur Ausgabe einer Ausgangsspannung angeschlossen. Um einen Ausfall der Wechselspannung zu überbrücken, ist der Zwischenkreis über einen Schalter mit der Batterie verbunden.

Der Einsatz eines Akkumulators erfordert keinen Abwärtsschaltregler, weil die weitgehend konstante Akkumulatorspannung an die Ausgangsgleichspannung anpassbar ist. Lediglich eine Ladeschaltung ist zur Aufladung des Akkumulators mittels Standardstromversorgung erforderlich. Bei Netzausfall wird die Last über einen weiteren Schalter mittels Akkumulator versorgt.

Nachteilig ist bei beiden Lösungen der Realisierungsaufwand, weil zwei gesteuerte Einheiten zum Einsatz kommen, nämlich eine Standardstromversorgung einerseits und eine Gleichstrom-USV andererseits.

Die US 2011/0133559 A1 offenbart eine Stromversorgung mit mehreren Energiespeichermodulen. Diese sind an einen Zwischenkreis mit konstanter Spannung angeschlossen. Ausgangsseitig stellt die Stromversorgung sowohl die konstante Zwischenkreisspannung als auch umgewandelte Gleichspannungen zur Verfügung.

In der US 2006/0290207 A1 sind eine Stromversorgung und eine Speichereinheit parallel an eine Eingangsspannung angeschlossen. Sobald die Eingangsspannung unter einen Grenzwert abfällt, bezieht die Stromversorgung über einen DC/DC-Wandler Energie aus der Speichereinheit.

Die US 5 049 805 A zeigt eine unterbrechungsfreie Stromversorgung mit Tiefentladungsschutz eines Akkumulators. Dabei sind eine zu versorgende Last über eine Tiefentladungsschutzschaltung und einen Abwärtswandler und der Akkumulator parallel an eine konstante Spannung angeschlossen.

Der Erfindung liegt die Aufgabe zugrunde, für eine Stromversorgung der eingangs genannten Art eine Verbesserung gegenüber dem Stand der Technik anzugeben.

Erfindungsgemäß wird diese Aufgabe gelöst durch eine Anordnung gemäß Anspruch 1. Weiterbildungen sind in abhängigen Ansprüchen angegeben.

Dabei ist ein Zwischenkreis mit variabler Zwischenkreisspannung zwischen einem eingangsseitigen DC-DC-Wandler und zumindest einem ausgangsseitigen Ausgangsschaltregler angeordnet, welcher die variable Zwischenkreisspannung in eine Ausgangsgleichspannung umwandelt und diese auf einen vorgegebenen Wert regelt. An diesen Zwischenkreis mit variabler Spannung ist ein Energiespeichermodul direkt angeschlossen.

Es ist somit kein zusätzliches Gerät mit einer Ladeschaltung bzw. Ladeüberwachung und einer Umschaltung der Versorgungszweige erforderlich. Die Zweistufigkeit eines DC-DC-Wandlers und eines nachgeschalteten Ausgangsschaltreglers ermöglicht die direkte Anschaltung eines Energiespeichers an den Zwischenkreis. Dieser ist günstigerweise als Kleinspannungszwischenkreis mit einer Spannung bis z.B. 45V ausgebildet, wodurch die Handhabung durch einen Benutzer einfacher und sicherer wird. Zudem sind beim Einsatz eines Akkumulators geringere Zellenzahlen ausreichend.

Als DC-DC-Wandler ist beispielsweise ein Resonanzwandler mit einem fixen Übersetzungsverhältnis vorgesehen.

Weil die erfindungsgemäße Stromversorgung bereits einen Ausgangsschaltregler umfasst, erfolgt eine Erhöhung der Netzausfallsüberbrückungszeit in einfacher Weise durch Zuschaltung weiterer Energiespeichermodule, ohne zusätzliche Veränderung des Schaltungsaufbaus. An den Zwischenkreis sind zudem mehrere Ausgangsschaltregler anschaltbar, sodass die Stromversorgung über mehrere, gegebenenfalls auch unterschiedliche Ausgangsgleichspannungen verfügt.

In einer vorteilhaften Ausbildung ist der Ausgangsschaltregler bzw. sind die Ausgangsschaltregler als Abwärtsschaltregler ausgebildet. Auf diese Weise lässt sich eine Zwischenkreisspannung als Kleinspannung einstellen, die ein gefahrloses Zu- und Wegschalten von Komponenten erlaubt. Von einem solchen Kleinspannungszwischenkreis wird mittels eines Abwärtsschaltreglers eine übliche Ausgangsspannung im Bereich von 24 Volt erreicht. Der geringe Niveauunterschied zwischen Ein- und Ausgangsspannung des Abwärtsschaltreglers ermöglicht dabei einen hohen Wirkungsgrad.

Dabei ist es von Vorteil, wenn das Energiespeichermodul in einem separaten Gehäuse angeordnet ist und mittels Steckkontakte mit dem Zwischenkreis verbindbar ist. Zur Verbindung mehrerer Energiespeichermodule weist der Zwischenkreis mehrere Kontakte auf. Alternativ dazu ist eine einfache Änderung der Netzausfallsüberbrückungszeit durch den Austausch von Energiespeichermodulen unterschiedlicher Kapazität durchführbar.

Ein weiterer Vorteil der erfindungsgemäßen Anordnung liegt darin, dass das Energiespeichermodul zusätzlich zur Abdeckung von Leistungsspitzen bei besonders unstetigen Lasten nutzbar ist, zum Beispiel beim Anlaufen eines Gleichstrommotors. Das Energiespeichermodul muss nicht extra zugeschaltet werden, weil es permanent an dem Zwischenkreis angeschaltet ist.

In einer Weiterbildung der Erfindung ist der DC-DC-Wandler über eine sogenannte aktive Power-Factor-Corretion-Schaltung (PFC-Schaltung) an eine eingangsseitige Versorgungsspannung angeschlossen. Eine solche Anordnung ist bei einphasigen Versorgungsnetzen vorzusehen und reduziert die Belastung des Netzes mit Oberwellen. Zudem ist damit ein breiterer Eingangsspannungsbereich möglich.

Im einfachsten Fall umfasst das Energiespeichermodul einen Kondensator, zum Beispiel einen Aluminium-Elektrolytkondensator oder einen sogenannten Ultra-Cap. Der Kondensator ist dabei direkt an den Zwischenkreis angeschlossen.

Um während eines Einschaltvorgangs der Stromversorgung einen Ladestrom des Kondensators zu begrenzen ist es sinnvoll, den Kondensator über einen Ladewiderstand an den Zwischenkreis anzuschließen. Die Aufladezeit des Kondensators limitiert dann nicht die Hochlaufzeit der Stromversorgung. Die Ausgangsgleichspannung steht schon vor dem vollständigen Laden des Kondensators zur Verfügung.

Zu diesem Ladewiderstand ist in einer günstigen Weiterbildung ein Schaltelement parallel geschaltet. Damit ist der Ladewiderstand überbrückbar, sobald der Kondensator aufgeladen ist. Zu diesem Zweck ist das Schaltelement mit einer Steuerung der Stromversorgung verbunden.

In einer weiteren Ausprägung der Erfindung umfasst das Energiespeichermodul einen Akkumulator, wodurch längere Netzausfallsüberbrückungszeiten realisierbar sind. Falls die Zwischenkreisspannung am Ausgang des DC-DC-Wandlers höher ist als die Ladeschlussspannung des Akkumulators, ist nur ein einfacher Schalter wie z.B. eine Diode zur Rückspeisung in den Zwischenkreis erforderlich. Jede sonstige Zusatzelektronik kann entfallen.

In anderen Fällen ist es sinnvoll, wenn der Akkumulator über eine Ladeschaltung an den Zwischenkreis angeschaltet ist. Eine solche Ladeschaltung besteht im einfachsten Fall aus einem Widerstand mit einem Serienschalter im Akkumulatormodul und einer Entkoppelungsdiode.

Eine andere Variante sieht vor, dass die Stromversorgung zumindest zwei ausgangsseitige Ausgangsschaltregler umfasst und dass der Akkumulator über einen Ausgangsschaltregler, welcher als Ladeschaltung ausgeprägt ist, an den Zwischenkreis angeschaltet ist. Der Ausgangsschaltregler verfügt dabei ohnehin über eine einstellbare Spannung und eine Strombegrenzung.

Im Falle eines Netzausfalls speist der Akkumulator über den Schaltregler in den Zwischenkreis zurück. Der Schaltregler arbeitet dann in umgekehrter Richtung als Aufwärtsschaltregler und hebt das Akkuspannungsniveau auf ein höheres Zwischenkreisspannungsniveau. Die Regelbarkeit der Ausgangsgleichspannung bzw. Ausgangsgleichspannungen bleibt im vollen Umfang erhalten. Damit ist auch die Zellenzahl des Akkumulators unabhängig von den Ausgangsgleichspannungen einzelner Lastausgänge.

Alternativ dazu ist der Akkumulator zusätzlich über ein Entkoppelungselement an den Zwischenkreis angeschaltet. In diesem Fall muss der Ausgangsschaltregler nicht auf das Rückspeisen des Akkumulatorstromes ausgelegt sein. Der Ausgangsschaltregler muss lediglich den wesentlich geringeren Ladestrom des Akkumulators beherrschen.

Von Vorteil ist es zudem, wenn die Ladeschaltung bzw. das Energiespeichermodul über eine zusätzliche Verbindung mit einer Steuerung der Stromversorgung verbunden ist, um den Ladezustand des Akkumulators festzustellen.

Generell ist es günstig, wenn die Ausgangsschaltregler eine untere Betriebsspannungsgrenze aufweisen, die unterhalb einer Entladespannung des Energiespeichermoduls liegt. Eine Entladeschlussspannung von Akkumulatoren liegt oftmals deutlich unterhalb einer Leerlaufspannung. Auch diese niedrige Entladeschlussspannung ist dann für die Ausgangsschaltregler als eingangsseitige Betriebsspannung nutzbar.

Eine weitere Ausprägung der Erfindung sieht vor, dass parallel zum Zwischenkreis ein weiterer Zwischenkreis vorgesehen ist, welcher über einen weiteren DC-DC-Wandler gespeist ist. An diesem weiteren Zwischenkreis sind dann wiederum Ausgangsschaltregler angeschlossen.

Dabei ist es günstig, wenn an jeden Zwischenkreis ein eigenes Energiespeichermodul angeschlossen ist. Damit ist ein einfacher Aufbau mit einer Aufteilung der Gesamtleistung auf zwei Zwischenkreise angegeben.

Alternativ dazu ist vorgesehen, dass an beide Zwischenkreise über eine jeweilige Schalteinheit ein gemeinsames Energiespeichermodul angeschlossen ist. Günstigerweise umfasst die jeweilige Schalteinheit eine Diode als Entkoppelungselement.

Vorteilhafterweise ist in Serie zu mindestens einer Schalteinheit eine Sicherung vorgesehen. Diese Sicherung ist so ausgelegt, dass bei Auslösung der andere Zwischenkreis noch versorgt werden kann. Auf diese Weise ist der abgesicherte Zwischenkreis im Störungsfall von dem Energiespeichermodul trennbar, ohne den Betrieb des weiteren Zwischenkreises zu beeinträchtigen. Mittels Energiespeichermodul ist auch weiterhin eine Pufferung des weiteren Zwischenkreises möglich.

In einem erfindungsgemäßen Verfahren zum Betreiben einer oben beschriebenen Stromversorgung ist vorgesehen, dass im normalen Betrieb das Energiespeichermodul mit Energie aus dem Zwischenkreis geladen wird und im Bedarfsfall Energie in den Zwischenkreis entlädt. Gegebenenfalls ist vor einem Anschließen eines Energiespeichermoduls an einen Zwischenkreis oder während eines Hochfahrvorgangs der Stromversorgung eine anderweitige Aufladung des Energiespeichermoduls vorgesehen.

Die Erfindung wird nachfolgend in beispielhafter Weise unter Bezugnahme auf die beigefügten Figuren erläutert. Es zeigen in schematischer Darstellung:
- Fig. 1: USV mit Kondensator nach dem Stand der Technik
- Fig. 2: USV mit Akkumulator nach dem Stand der Technik
- Fig. 3: Schaltungsanordnung mit Kondensator
- Fig. 4: Schaltungsanordnung mit Kondensator und Ladeschaltung
- Fig. 5: Schaltungsanordnung mit Akkumulator und Ladeschaltung
- Fig. 6: Schaltungsanordnung mit Akkumulator und einem Schaltregler, welcher als Ladeschaltung genutzt wird
- Fig. 7: Schaltregler gemäß Fig. 6 mit bidirektionaler Arbeitsweise
- Fig. 8: Stromversorgung mit zwei Pfaden und zwei Energiespeichermodulen
- Fig. 9: Stromversorgung mit zwei Pfaden und einem Energiespeichermodul

Eine erste bekannte Lösung sieht eine USV mittels eines Kondensators 5 vor (Fig. 1). Im Normalbetrieb ist eine Last 3 über einen Schalter 2 an eine Stromversorgung 1 angeschaltet. Die Stromversorgung 1 ist an ein einphasiges oder dreiphasiges Versorgungsnetz angeschlossen und liefert an ihrem Ausgang eine Ausgangsgleichspannung. An dieser Ausgangsgleichspannung ist über einen bidirektionalen Buck/Boost-Wandler 4 der Kondensator 5 angeschlossen. Der Buck/Boost-Wandler 4 weist dabei einen Ausgang auf, der über den Schalter 2 mit der Last 3 verbindbar ist.

Wenn das Versorgungsnetz ausfällt, schaltet der Schalter 2 den Strompfad von der Stromversorgung 1 auf den Ausgang des Buck/Boost-Wandlers 4 um. Die im Kondensator 5 gespeicherte Energie wird mittels Buck/Boost-Wandler 4 an die Last 3 abgegeben, bis entweder das Versorgungsnetz wieder Energie liefert oder die Spannung im Kondensator 5 unter die Minimaleingangsspannung des Buck/Boost-Wandlers 4 abfällt. Im letzteren Fall reicht die Überbrückungskapazität des Kondensators 5 nicht aus.

Um die Netzausfallsüberbrückungszeit zu verlängern werden nach dem Stand der Technik Akkumulatoren eingesetzt. Eine entsprechende bekannte Schaltung ist in Fig. 2 gezeigt. Wieder ist eine Last 3 über einen Schalter 2 an eine Stromversorgung 1 angeschlossen. An die Stromversorgung 1 ist zudem eine Ladeschaltung 6 für einen Akkumulator 7 angeschlossen. Über einen weiteren Schalter 2a als Entkoppelungselement ist zudem die Last mit dem Akkumulator 7 verbunden.

Wenn die Netzversorgung ausfällt, bezieht die Last 3 ihre Energie über den weiteren Schalter 2a direkt aus dem Akkumulator 7.

Beide bekannten Lösungen benötigen neben einer Standardstromversorgung ein separates USV-Gerät mit eigener Schaltung und Steuerung.

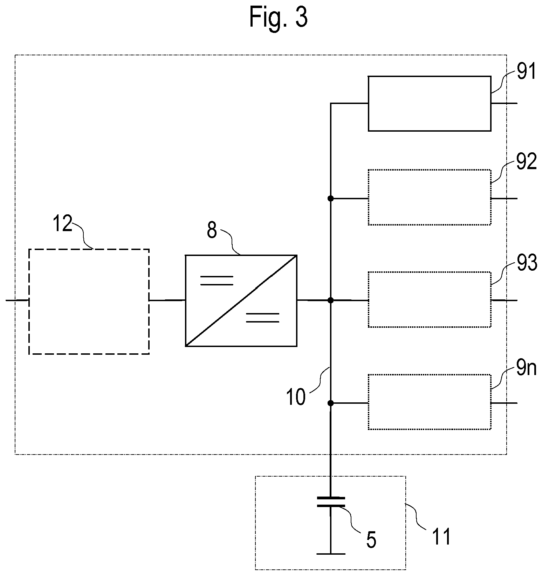

Eine Vereinfachung gemäß der vorliegenden Erfindung ist in Fig. 3 dargestellt. Dabei ist eine Stromversorgung als Schaltnetzteil mit einem DC-DC-Wandler 7 und zumindest einem nachgeschalteten Ausgangsschaltregler 91 ausgebildet. Im vorliegenden Beispiel sind an den Ausgang des DC-DC-Wandlers 8 vier Ausgangsschaltregler 91, 92, 93, 9n angeschaltet. Die Verbindung zwischen DC-DC-Wandler 8 und den Ausgangsschaltreglern 91, 92, 93, 9n bildet den Zwischenkreis 10, an dem eine variable Spannung anliegt. Der DC-DC-Wandler 8 ist beispielsweise als Resonanzwandler mit fixem Übertragungsverhältnis ausgebildet. Dient ein einphasiges Wechselspannungsnetz als Versorgungsnetz, ist dem DC-DC-Wandler 8 günstigerweise eine aktive PFC-Schaltung 12 vorgeschaltet, um Oberwellen im Versorgungsnetz zu minimieren. Eine Derartige Stromversorgung eignet sich insbesondere zur Versorgung mehrerer Lasten mit gleichen oder unterschiedlichen Ausgangsgleichspannungen. Jeder einzelne Ausgangsschaltregler 91, 92, 93, 9n wandelt die variable Zwischenkreisspannung in eine jeweilige Ausgangsgleichspannung um und regelt diese auf den jeweils vorgegebenen Wert. Der Zwischenkreis 10 ist günstigerweise als Kleinspannungszwischenkreis mit einer Spannung zwischen 30 und 60 Volt ausgelegt. Die Ausgangsgleichspannungen liegen bei Einsatz von Abwärtsschaltreglern unter diesem Spannungsniveau (z.B. 24V).

An den Zwischenkreis 10 ist direkt ein Kondensator 5 als Energiespeichermodul 11 angeschlossen. Dabei ist das Energiespeichermodul 11 beispielsweise in einem eigenen Gehäuse angeordnet und über Verbindungskontakte mit dem Zwischenkreis 10 verbindbar.

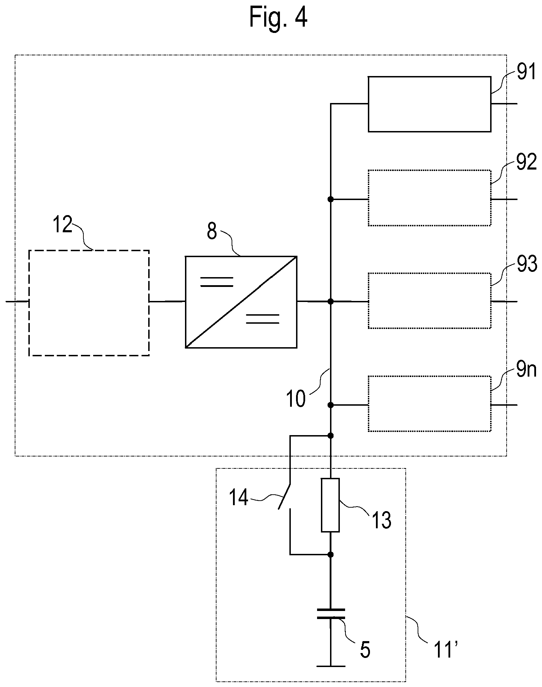

Zum kontrollierten Aufladen des Energiespeichermoduls 11 ist in Fig. 4 zwischen dem Kondensator 5 und dem Zwischenkreis 10 ein Ladewiderstand 13 mit einem parallel geschalteten Schalter 14 vorgesehen. Diese Schaltung verhindert, dass während eines Einschaltvorgangs der Stromversorgung die gesamte Energie am Ausgang des DC-DC-Wandlers 8 zum Aufladen des Kondensators 5 verwendet wird. Stattdessen wird während des Kondensatoraufladens die Zwischenkreisspannung so hoch gehalten, dass die Ausgangsschaltregler 91, 92, 93, 9n bereits eine jeweilige Ausgangsgleichspannung liefern.

Der Widerstand 13 und der Schalter 14 sind entweder gemeinsam mit dem Kondensator 5 in einem modifizierten Energiespeichermodul 11' zusammengefasst oder in einer modifizierten Zwischenkreisschaltung integriert.

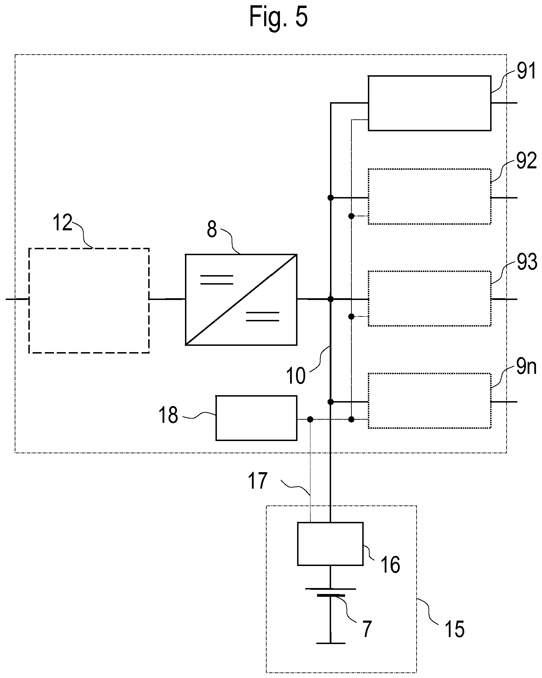

Eine einfache Akkumulatorlösung ist in Fig. 5 dargestellt. Der Zwischenkreis 10 ist über eine Ladeschaltung 16 mit einem Akkumulator 7 verbunden. Die Ladeschaltung 16 umfasst dabei neben einem Laderegler auch einen Ausgangsschaltregler oder zumindest ein Entkoppelungselement zur Abgabe der Akkumulatorenergie an den Zwischenkreis 10. Akkumulator 7 und Ladeschaltung 16 sind beispielsweise in einem gemeinsamen Gehäuse zu einem Energiespeichermodul 15 zusammengefasst und über Verbindungskontakte mit dem Zwischenkreis 10 verbunden. Die Ladeschaltung 16 kann alternativ dazu in einer Zwischenkreisschaltung angeordnet sein.

Einer Steuerung 18 der Stromversorgung ist über eine separate Verbindung 17 ein Ladesignal der Ladeschaltung zugeführt. Die z.B. als Mikrocontroller ausgeführte Steuerung 18 verfügt zu diesem Zweck über eine Serielle Schnittstelle. Der Ladezustand des Akkumulators 7 kann auf diese Weise am Stromversorgungsgerät angezeigt werden oder es erfolgt eine Informationsweitergabe an eine externe Anlagensteuerung mittels geeigneter Geräteschnittstelle.

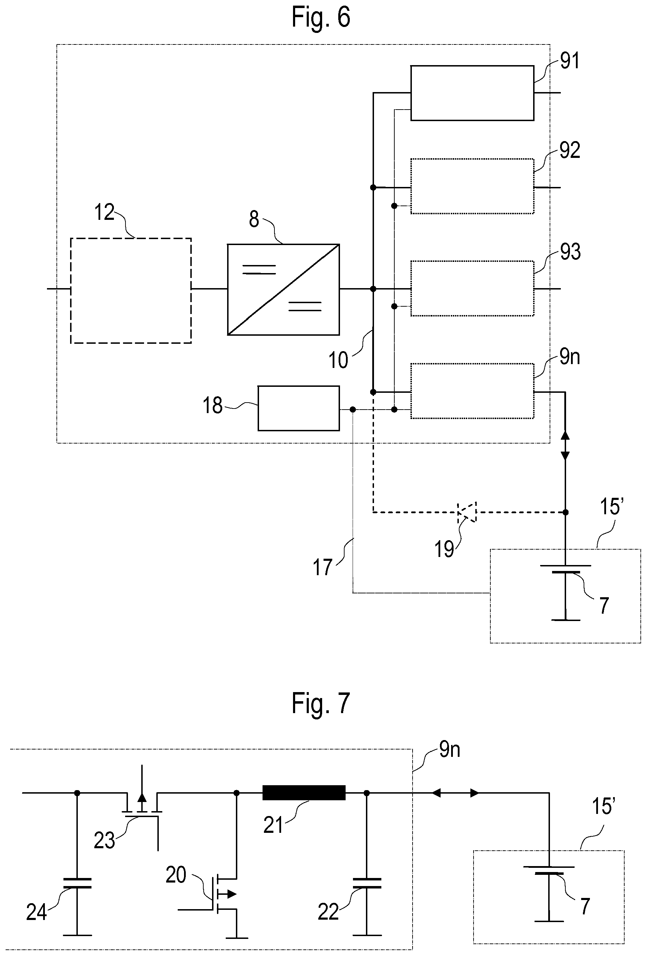

Umfasst die Stromversorgung mehrere Ausgangsschaltregler 91, 92, 93, 9n, wird günstigerweise einer dieser Schaltregler 9n als Ladeschaltung des Akkumulators 7 genutzt, wie in Fig. 6 dargestellt. Des Energiespeichermodul 15' ist hierbei direkt an den Ausgang des Schaltreglers 9n angeschaltet. Zudem besteht eine Verbindung 17 mit der Steuerung 18 zwecks Signalisierung des Ladezustands.

Wenn der Schaltregler 9n nur als Laderegler des Akkumulators 7 verwendet wird, ist der Akkumulator 7 zusätzlich über ein Entkoppelungselement 19 mit dem Zwischenkreis 10 verbunden. Als Entkoppelungselement 19 kommen zum Beispiel eine Diode, ein Transistor oder ein Relaiskontakt in Frage. Bei dieser Verschaltungsvariante ist die Dimensionierung in der Weise wählbar, dass eine Ladung des Akkumulators 7 nur innerhalb eines bestimmten Eingangsspannungsbereichs möglich ist (z.B. 360VAC bis 550VAC). Bei Versorgungsnetzspannungen außerhalb dieses Bereichs (z.B. 320-359VAC) wird keine Ladung durchgeführt. Damit erreicht man einerseits ein günstiges Übersetzungsverhältnis des DC-DC-Wandlers 8. Andererseits wird der DC-DC-Wandler 8 nicht zusätzlich mit einem Ladestrom beaufschlagt, wenn der ohnedies bereits erhöhte Strom infolge einer hohen Ausgangsleistung mit begleitendem Versorgungsspannungseinbruch zu einer thermischen Belastung des DC-DC-Wandlers 8 führt.

Alternativ zu der Rückspeisung mittels Entkoppelungselement 19 ist der als Ladeschaltung ausgebildete Schaltregler 9n bidirektional ausgebildet. Dabei ist anstelle einer masseseitigen Freilaufdiode ein erster Schalter 20 vorgesehen, wie in Fig. 7 dargestellt. Der Schaltregler 9n umfasst eine Drossel 21. Deren erster Anschluss ist mit dem Akkumulator 7 und über einen Kondensator 22 mit einer Masse verbunden. Der zweite Anschluss der Drossel 21 ist über den ersten Schalter 21 mit der Masse verbunden und über einen zweiten Schalter 23 an den Zwischenkreis 10 geschaltet, wobei die Verbindung des zweiten Schalters 23 mit dem Zwischenkreis 10 über einen weiterer Kondensator 24 mit der Masse verbunden ist.

Diese Schaltung eines bidirektionalen Buck/Boost-Schaltreglers 9n fungiert dabei als Ladeschaltung für den Akkumulator 7 und als Rückspeisewandler im Pufferbetrieb bei Netzausfall. Er ist für den gesamten Strom ausgelegt, welcher im Pufferbetrieb zurück in den Zwischenkreis 10 fließt. Dabei besteht die Möglichkeit, im Pufferbetrieb die Ausgangsleistung der Stromversorgung zu reduzieren, um bei aufrechtem Notbetrieb die Überbrückungszeit zu verlängern und die Belastung des Schaltreglers 9n zu reduzieren.

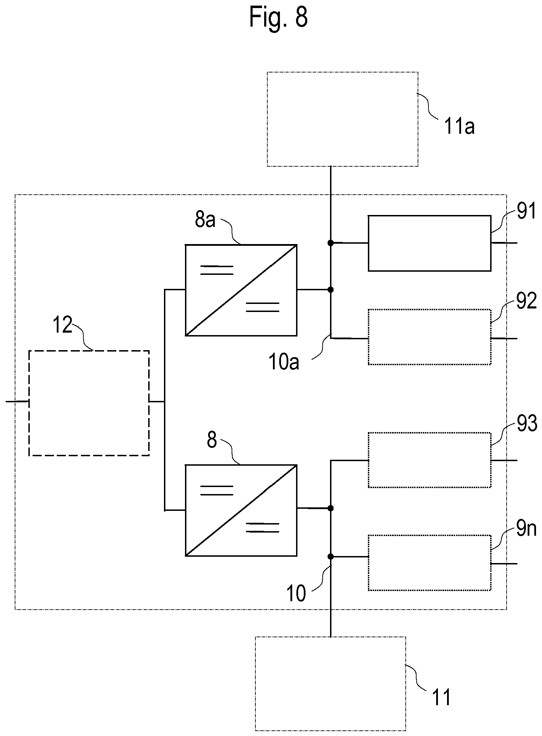

In Fig. 8 ist eine Stromversorgung mit zwei Pfaden dargestellt. Jeder Pfad umfasst einen eigenen DC-DC-Wandler 8 bzw. 8a und einen eigenen Zwischenkreis 10 bzw. 10a. An jeden Zwischenkreis 10, 10a sind Ausgangsschaltregler 91, 92 bzw. 93, 9n und jeweils ein Energiespeichermodul 11 angeschlossen. Im dargestellten Fall umfasst jedes Energiespeichermodul 11 einfacherweise einen Kondensator als Speicherelement. Es sind aber auch alle anderen Ausprägungen eines Energiespeichermoduls 11', 15, 15' vorsehbar.

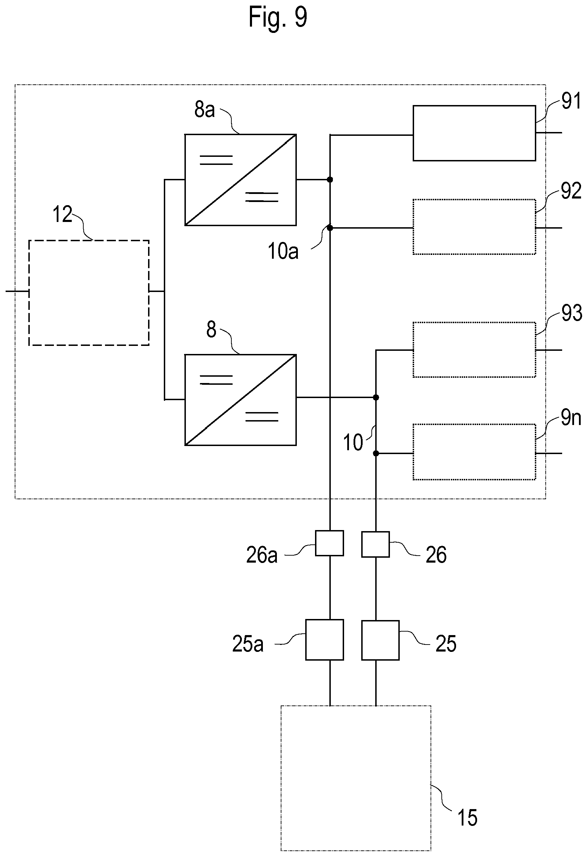

Fig. 9 zeigt ebenfalls eine Stromversorgung mit zwei Pfaden. Beide Zwischenkreise 10, 10a weisen eine gemeinsame Masse auf, wodurch über jeweilige Schalteinheiten 25, 25a ein gemeinsames Energiespeichermodul 15 anschließbar ist. Beispeisweise umfasst dieses einen Akkumulator und eine Ladeschaltung, die Energie aus einem der beiden Zwischenkreise 10, 10a bezieht. Auch alle anderen Ausprägungen eines Energiespeichermoduls 11, 11', 15' sind über entsprechend angesteuerte Schalteinheiten 25, 25a mit beiden Zwischenkreisen 10, 10a verbindbar. In einer Weiterbildung ist in Serie mit jeder Schalteinheit 25, 25a eine Sicherung 26, 26a angeordnet. Diese trennt im Störungsfall einen defekten Pfad von dem Energiespeichermodul 15, wodurch weiterhin ein Pufferbetrieb des zweiten Pfads möglich ist. Die Sicherung 26, 26a ist dabei so ausgelegt, dass sie erst nach einer nicht dargestellten internen Sicherung des defekten Pfads auslöst.

Die Ausführungen zu den Ausprägungen mit zwei Pfaden gelten in analoger Weise für Stromversorgungen mit mehr als zwei Pfaden.

Mit der vorgestellten Erfindung erhält man eine einfach aufgebaute Gerätelösung für eine Stromversorgung mit flexibel variierbarem Energiespeichermodul. Ohne baulichen Zusatzaufwand ist je nach Anwendungsfall ein anderes Energiespeichermodul 11, 11', 15, 15' bzw. ein ergänzendes Energiespeichermodul 11, 11', 15, 15' an den Zwischenkreis 10 anschaltbar. Jedes Energiespeichermodul 11, 11', 15, 15' ist dabei als Kondensatoreinheit oder Akkumulatoreinheit ohne aufwendige USV-Schaltung aufgebaut.

## Patentansprüche

1. Stromversorgung mit zumindest einem Ausgang zur Ausgabe einer Ausgangsgleichspannung und einer Schaltung zur unterbrechungsfreien Stromversorgung, wobei ein Zwischenkreis (10) zwischen einem eingangsseitigen DC-DC-Wandler (8) und zumindest einem ausgangsseitigen Ausgangsschaltregler (91, 92, 93, 9n) zur Regelung der zumindest einen Ausgangsgleichspannung angeordnet ist und wobei an dem Zwischenkreis (10) ein Energiespeichermodul (11, 11', 15, 15') angeschlossen ist, **dadurch gekennzeichnet, dass** das Energiespeichermodul (15, 15') einen Akkumulator (7) umfasst, der über eine Ladeschaltung (16) an den Zwischenkreis (10) angeschaltet ist, und dass der zumindest eine Ausgangsschaltregler (91, 92, 93, 9n) eine untere Betriebsspannungsgrenze aufweist, die unterhalb einer Entladespannung des Energiespeichermoduls (15, 15') liegt.

2. Stromversorgung nach Anspruch 1, **dadurch gekennzeichnet, dass** der Ausgangsschaltregler (91, 92, 93, 9n) als Abwärtsschaltregler ausgebildet ist.

3. Stromversorgung nach Anspruch 1 oder 2, **dadurch gekennzeichnet, dass** das Energiespeichermodul (11, 11', 15, 15') in einem separaten Gehäuse angeordnet ist und mittels Steckkontakte mit dem Zwischenkreis (10) verbindbar ist.

4. Stromversorgung nach einem der Ansprüche 1 bis 3, **dadurch gekennzeichnet, dass** der DC-DC-Wandler (8) über eine sogenannte aktive Power-Factor-Correction-Schaltung (12) an eine eingangsseitige Versorgungsspannung angeschlossen ist.

5. Stromversorgung nach einem der Ansprüche 1 bis 4, **dadurch gekennzeichnet, dass** die Stromversorgung zumindest zwei ausgangsseitige Ausgangsschaltregler (91, 92, 93, 9n) umfasst und dass der Akkumulator (7) über einen Ausgangsschaltregler (9n), welcher als Ladeschaltung ausgeprägt ist, an den Zwischenkreis (10) angeschaltet ist.

6. Stromversorgung nach Anspruch 5, **dadurch gekennzeichnet, dass** der Akkumulator (7) zusätzlich über ein Entkoppelungselement (19) an den Zwischenkreis (10) angeschaltet ist.

7. Stromversorgung nach Anspruch 6, **dadurch gekennzeichnet, dass** die Ladeschaltung (16) bzw. das Energiespeichermodul (15') über eine zusätzliche Verbindung (17) mit einer Steuerung (18) der Stromversorgung verbunden ist, um den Ladezustand des Akkumulators (7) festzustellen.

8. Stromversorgung nach einem der Ansprüche 1 bis 7, **dadurch gekennzeichnet, dass** parallel zum Zwischenkreis (10) ein weiterer Zwischenkreis (10a) vorgesehen ist, welcher über einen weiteren DC-DC-Wandler (8a) gespeist ist.

9. Stromversorgung nach Anspruch 8, **dadurch gekennzeichnet, dass** an jeden Zwischenkreis (10, 10a) ein eigenes Energiespeichermodul (11, 11', 15, 15') angeschlossen ist.

10. Stromversorgung nach Anspruch 9, **dadurch gekennzeichnet, dass** an beide Zwischenkreise (10, 10a) über eine jeweilige Schalteinheit (25, 25a) ein gemeinsames Energiespeichermodul (11, 11', 15, 15') angeschlossen ist.

11. Stromversorgung nach Anspruch 10, **dadurch gekennzeichnet, dass** die jeweilige Schalteinheit (25, 25a) eine Diode umfasst.

12. Stromversorgung nach Anspruch 11, **dadurch gekennzeichnet, dass** in Serie zu mindestens einer Schalteinheit (25, 25a) eine Sicherung (26, 26a) vorgesehen ist.

13. Verfahren zum Betreiben einer Stromversorgung nach einem der Ansprüche 1 bis 12, **dadurch gekennzeichnet, dass** das Energiespeichermodul (11, 11', 15, 15') mit Energie aus dem Zwischenkreis (10, 10a) geladen wird und im Bedarfsfall Energie in den Zwischenkreis (10, 10a) entlädt.

## Claims

1. Power supply unit comprising at least one output for outputting an output DC voltage and a circuit for uninterrupted power supply, wherein a DC link (10) is arranged between a DC-DC converter (8) on the input side and at least one output switching controller (91, 92, 93, 9n) for regulating the at least one output DC voltage on the output side, and wherein an energy storage module (11, 11', 15, 15') is connected to the DC link (10), **characterised in that** the energy storage module (15, 15') comprises an accumulator (7), which is connected to the DC link (10) via a charging circuit (16), and that the at least one output switching controller (91, 92, 93, 9n) has a lower operating voltage limit, which is lower than a discharge voltage of the energy storage module (15, 15').

2. Power supply unit according to claim 1, **characterised in that** the output switching controller (91, 92, 93, 9n) is designed as a step-down switching controller.

3. Power supply unit according to claim 1 or 2, **characterised in that** the energy storage module (11, 11', 15, 15') is arranged in a separate housing and can be connected to the DC link (10) by means of plug-in contacts.

4. Power supply unit according to one of claims 1 to 3, **characterised in that** the DC-DC converter (8) is connected to a supply voltage on the input side via a so-called active Power Factor Correction circuit (12).

5. Power supply unit according to one of claims 1 to 4, **characterised in that** the power supply unit comprises at least two output switching controllers (91, 92, 93, 9n) on the output side, and that the accumulator (7) is connected to the DC link (10) via an output switching controller (9n) which is designed as a charging circuit.

6. Power supply unit according to claim 5, **characterised in that** the accumulator (7) is additionally connected to the DC link (10) via a decoupling element (19).

7. Power supply unit according to one of claims6, **characterised in that** the charging circuit (16) or the energy storage module (15') is connected to a control unit (18) of the power supply unit via an additional connection (17) in order to determine the charge status of the accumulator (7).

8. Power supply unit according to one of claims 1 to 7, **characterised in that** a further DC link (10a) is provided in parallel with the DC link (10) and is supplied via a further DC-DC converter (8a).

9. Power supply unit according to claim 8, **characterised in that** each DC link (10, 10a) is connected to its own energy storage module (11, 11', 15, 15').

10. Power supply unit according to claim 9, **characterised in that** a shared energy storage module (11, 11', 15, 15') is connected to both DC links (10, 10a) via a respective switch unit (25, 25a).

11. Power supply unit according to claim 10, **characterised in that** the respective switch unit (25, 25a) comprises a diode.

12. Power supply unit according to claim 11, **characterised in that** a protection device (26, 26a) is provided in series with at least one switch unit (25, 25a).

13. Method for operating a power supply unit according to one of claims 1 to 12, **characterised in that** the energy storage module (11, 11', 15, 15') is charged with energy from the DC link (10, 10a) and discharges energy into the DC link (10, 10a) as required.

## Revendications

1. Alimentation électrique avec au moins une sortie pour délivrer une tension continue de sortie et avec un circuit d'alimentation électrique sans interruption, un circuit intermédiaire (10) étant intercalé entre un convertisseur continu-continu (8) côté entrée et au moins un régulateur de commutation de sortie (91, 92, 93, 9n) côté sortie pour la régulation de la au moins une tension continue de sortie, et un module accumulateur d'énergie (11, 11', 15, 15') étant raccordé au circuit intermédiaire (10), **caractérisée en ce que** le module accumulateur d'énergie (15, 15') comprend un accumulateur (7) qui est raccordé via un circuit de charge (16) au circuit intermédiaire (10), et **en ce que** le au moins un régulateur de commutation de sortie (91, 92, 93, 9n) présente une limite basse de tension de fonctionnement qui se situe au-dessous d'une tension de décharge du module accumulateur d'énergie (15, 15').

2. Alimentation électrique selon la revendication 1, **caractérisée en ce que** le régulateur de commutation de sortie (91, 92, 93, 9n) est réalisé comme régulateur de commutation abaisseur.

3. Alimentation électrique selon la revendication 1 ou 2, **caractérisée en ce que** le module accumulateur d'énergie (11, 11', 15, 15') est placé dans un boîtier séparé et peut être relié au circuit intermédiaire (10) au moyen de contacts à fiches.

4. Alimentation électrique selon l'une des revendications 1 à 3, **caractérisée en ce que** le convertisseur continu-continu (8) est raccordé via un circuit de correction de facteur de puissance active (12) à une tension d'alimentation côté entrée.

5. Alimentation électrique selon l'une des revendications 1 à 4, **caractérisée en ce que** l'alimentation électrique comprend au moins deux régulateurs de commutation de sortie (91, 92, 93, 9n) côté sortie, et **en ce que** l'accumulateur (7) est raccordé via un régulateur de commutation de sortie (9n), réalisé comme circuit de charge, au circuit intermédiaire (10) .

6. Alimentation électrique selon la revendication 5, **caractérisée en ce que** l'accumulateur (7) est raccordé en outre via un élément de découplage (19) au circuit intermédiaire (10).

7. Alimentation électrique selon la revendication 6, **caractérisée en ce que** le circuit de charge (16) resp. le module accumulateur d'énergie (15') est relié via une liaison supplémentaire (17) à une commande (18) de l'alimentation électrique, afin de déterminer l'état de charge de l'accumulateur (7).

8. Alimentation électrique selon l'une des revendications 1 à 7, **caractérisée en ce qu'**un autre circuit intermédiaire (10a), alimenté via un autre convertisseur continu-continu (8a), est monté en parallèle au circuit intermédiaire (10).

9. Alimentation électrique selon la revendication 8, **caractérisée en ce qu'**un propre module accumulateur d'énergie (11, 11', 15, 15') est raccordé à chaque circuit intermédiaire (10, 10a).

10. Alimentation électrique selon la revendication 9, **caractérisée en ce qu'**un module accumulateur d'énergie commun (11, 11', 15, 15') est raccordé via une unité de commutation respective (25, 25a) aux deux circuits intermédiaires (10, 10a) .

11. Alimentation électrique selon la revendication 10, **caractérisée en ce que** l'unité de commutation respective (25, 25a) comprend une diode.

12. Alimentation électrique selon la revendication 11, **caractérisée en ce qu'**un fusible de sécurité (26, 26a), connecté en série avec au moins une unité de commutation (25, 25a), est prévu.

13. Procédé pour faire fonctionner une alimentation électrique selon l'une des revendications 1 à 12, **caractérisé en ce que** le module accumulateur d'énergie (11, 11',15, 15') est chargé en énergie à partir du circuit intermédiaire (10, 10a) et, en cas de besoin, décharge de l'énergie dans le circuit intermédiaire (10, 10a).
